# FASCICULE DE BREVET EUROPEEN

(11) **EP 0 968 875 B1**
(45) Date de publication et mention de la délivrance du brevet: **26.11.2003**
(21) Numéro de dépôt: 99420106.9
(22) Date de dépôt: 27.04.1999
(51) Int. Cl.: B60N 3/04

(54) **Revêtement de sol notamment pour automobiles et procédé pour son obtention**
Fussmatte, insbesondere für Kraftfahrzeuge, und Verfahren zu ihrer Herstellung
Floor Mat Especially for Automotives and Process for its Manufacture

(30) Priorité: 30.06.1998 FR 9808481
(43) Date de publication de la demande: 05.01.2000
(73) Titulaire: TEXTILES ET PLASTIQUES CHOMARAT, 07160 Le Cheylard (FR)
(72) Inventeur: Baccus, Gérard, 07160 Accons (FR); Sanial, Philippe, 07160 Le Cheylard (FR)
(74) Mandataire: Vuillermoz, Bruno

(56) Documents cités:
- EP-A- 0 046 536
- EP-A- 0 512 904
- DE-U- 9 212 210
- DE-U- 29 519 596
- FR-A- 2 694 248
- GB-A- 2 072 578

## Description

### Domaine Technique

Dans le secteur de l'automobile, le plancher du véhicule est en général recouvert d'un revêtement ayant pour but non seulement d'assurer la finition, mais également de réaliser une isolation tant phonique que thermique de l'habitacle.

L'invention porte sur un nouveau type de revêtement à savoir un matériau pour le revêtement de sol constitué par un complexe multicouches du genre défini dans le préambule de la revendication indépendante 1 (tel que connu, par exemple, de DE-U-92 12 210) utilisable pour une telle application du genre défini dans le préambule de la revendication indépendante 1 (tel que connu, par exemple, de DE-U-92 12 210); elle concerne également un procédé de fabrication permettant la réalisation d'un tel complexe.

### Techniques antérieures

A ce jour, pour réaliser ces revêtements, on utilise en général des revêtements de sol conventionnels constitués par exemple par une structure textile du type feutre, tapis aiguilleté ou autre, associée éventuellement à une sous-couche en mousse ou autre.

Afin de faciliter l'entretien et améliorer la résistance aux frottements, on associe en général à de tels revêtements textiles des tapis en caoutchouc qui sont soit intégrés dans des zones prédéterminées de la structure textile, soit simplement rapportés sur cette dernière.

Par ailleurs, il a également été proposé de réaliser des revêtements constitués entièrement par une structure en caoutchouc qui est disposée soit directement sur le plancher du véhicule, soit sur une couche intermédiaire isolante telle qu'un feutre.

Dans le domaine des revêtements de sol, pour habitations notamment, il a été également proposé depuis fort longtemps d'utiliser des complexes à base de matériau synthétique, tel que par exemple chlorure de polyvinyle (PVC) ou similaire, associé en général à une structure de renforcement qui peut être soit noyée dans la masse de la matière soit rapportée contre la face envers de cette dernière.

Très souvent, cette feuille thermoplastique renforcée ou non est associée à une sous-couche, en mousse notamment, et ce pour améliorer le confort et l'isolation.

De tels revêtements de sol ne sont cependant pas adaptés pour réaliser le revêtement de planchers de véhicules qui, en général, ne sont pas parfaitement plans, ce qui implique que le revêtement doit parfois être conformé.

Par ailleurs, l'action exercée par les utilisateurs d'un véhicule sur le revêtement de sol, est totalement différente de celle d'un usage normal de revêtement de sol pour une habitation, ou tout autre type de locaux.

En effet, outre les caractéristiques d'isolation phonique et thermiques que doit présenter un revêtement de sol pour automobile, il doit également être parfaitement stable lorsqu'il est mis en place, présenter une grande résistance à l'abrasion et au poinçonnement, être facile à entretenir, et enfin, pouvoir être recyclé.

### Exposé de l'invention

Or on a trouvé, et c'est ce qui fait l'objet de la présente invention, un nouveau type de matériau particulièrement adapté pour réaliser le revêtement des parois internes d'un véhicule et plus particulièrement du plancher de l'habitacle qui non seulement, permet de remplir l'ensemble des conditions exigées pour une telle utilisation à savoir insonorisation phonique et thermique, conformabilité, résistance à l'abrasion et au poinçonnement, facilité d'entretien, et qui, par ailleurs, présente une très grande stabilité après mise en place et parfaitement recyclable.

Par ailleurs, ce matériau est susceptible de recevoir un décor de surface, sa face visible pouvant avoir un aspect lisse, brillant ou mat, et/ou grainé, aspect obtenu simultanément à la réalisation du complexe sans traitement ultérieur et peut être utilisé au lieu et place des tapis en caoutchouc conventionnels.

D'une manière générale, le matériau conforme à l'invention est donc constitué par un complexe multicouches comportant une couche inférieure dite « couche support » destinée à être en contact avec la surface à revêtir et assurant le confort, l'absorption des chocs, l'insonorisation, recouverte d'une -couche de surface présentant une grande résistance à l'abrasion, les deux couches étant intimement liées l'une à l'autre.

Le matériau conforme à l'invention, telle que définie dans la revendication indépendante 1, se caractérise en ce que la totalité de ces constituants sont sélectionnés dans la famille des polymères synthétiques à base de polyoléfine, et plus particulièrement à base de polyéthylène :
- la couche de surface dudit complexe étant constituée par une composition comportant un mélange de polyéthylène basse densité, polyéthylène haute densité, éthylène vinyl acétate et des charges ;
- la couche support destinée à être en contact avec la surface à revêtir étant quant à elle à base d'une composition de polyéthylène basse densité fortement chargée ;
- l'association des deux couches entre elles est réalisée par complexage des deux constituants lors de l'extrusion de la feuille de surface, le complexage étant réalisé par calandrage immédiatement à la sortie de l'extrudeuse du film de surface alors que ce dernier est encore à température élevée.

La formulation des différentes couches entrant dans la constitution d'un complexe conforme à l'invention peut varier en fonction des propriétés finales que l'on souhaite obtenir en fonction de la zone du véhicule où le revêtement doit être disposé et les zones pour lesquelles on souhaite avoir par exemple une résistance à l'abrasion ou aux rayures, une isolation thermique et/ou phonique plus ou moins importante.

Pour la feuille de surface à base de polyoléfine, la formulation type comporte environ 10 à 12 % de charge telle que carbonate de calcium pour 83 à 58 % de polyéthylène basse densité et 5 à 30 % de polyéthylène haute densité, le polyéthylène haute densité apportant une augmentation de la dureté de surface donnant une meilleure résistance à la rayure.

Le poids au mètre carré de cette feuille de surface peut être compris entre 100 et 800 g/m2, voire même plus, mais, en général il est de l'ordre de 300 à 500 g/m2.

Le poids de la feuille de surface sera essentiellement adapté en fonction de l'état final que l'on veut donner à ladite feuille et notamment aux grain que l'on lui communiquer.

Concernant la couche support, elle est à base de polyéthylène fortement chargée, la quantité de charge, constituée de sulfate de baryum, étant de l'ordre de 80 % en poids par rapport au support formé, ce qui permet d'obtenir une structure lourde améliorant la stabilité et évitant les glissements lorsque le complexe est disposé directement contre le sol.

Une telle couche support a un poids au mètre carré qui peut varier de 1,5 à 8 kilos voire même plus, une feuille pesant de l'ordre de 2 à 5 kg/m2 convenant pour la plupart des applications.

La densité de cette structure chargée peut être comprise entre 1 et 3 et est avantageusement égale à 2.

Eventuellement, un support non tissé ou autre structure textile, de préférence également à base de polyéthylène ou polypropylène, peut être incorporé à cette sous-couche permettant ainsi d'améliorer les performances mécaniques du complexe et notamment la résistance au poinçonnement.

L'invention porte également sur un procédé permettant la réalisation d'un tel complexe, ledit procédé consistant :
- à disposer, à la sortie d'une extrudeuse, une calandre comportant de préférence un cylindre en acier et un cylindre revêtu d'une surface à base de caoutchouc ;
- à introduire dans l'espace compris entre les cylindres de la calandre une feuille support préalablement préparée à base de polyéthylène fortement chargé et ;
- à extruder le film destiné à constituer la couche de surface, la température de la feuille étant comprise entre 200 et 250°C et de préférence 230°C ;
- et à associer ladite couche de surface et la feuille préalablement formée par passage de ces deux éléments à travers de la calandre.

Eventuellement, afin de favoriser l'adhésion des deux constituants entre eux, la feuille préalablement préparée qui est destinée à constituer la couche support lourde du complexe peut être préchauffée.

Selon une forme préférentielle de mise en oeuvre de ce procédé, la couche lourde préalablement préparée est amenée à l'intérieur de la calandre par passage sur le cylindre caoutchouté, alors que le film de surface est, quant à lui, en contact avec le cylindre en acier.

En procédant d'une telle manière, il est donc possible d'appliquer un grainage sur la feuille de surface et, également, en réglant la température du cylindre en acier, il est possible de modifier la brillance du matériau. La feuille est d'autant plus mate que la température est élevée, cette température étant cependant réglée au maximum à environ 80°C.

### Manière de réaliser l'invention

L'invention et les avantages qu'elle apporte seront cependant mieux compris grâce aux exemples concrets de réalisation donnés ci-après à titre indicatif, mais non limitatif.

### Exemple 1

On réalise un complexe conforme à l'invention comportant un support constitué d'une feuille de polyéthylène préalablement réalisé comportant :
- 20 % de polyéthylène
- 80 % de charge constituée par des carbonates de calcium.

Le poids de ce support est de 2,6 kg/m2 et il a une épaisseur del,2 mm.

Sa densité est de l'ordre de 2.

Il comporte un renfort constitué par un non tissé, également à base de polyéthylène pesant 30 g/m2.

A ce support, sur une installation de calandrage disposée en aval d'une extrudeuse, on associe un film extrudé à une température de 230°C et constitué d'une composition comportant :
- 12 % de charge carbonate de calcium ;
- 78 % de polyéthylène basse densité et ;
- 10 % de polyéthylène haute densité.

Le poids de la feuille extrudée est de 500 g/m2 et elle est associée par calandrage en étant en contact avec le cylindre en acier de la calandre. La vitesse de rotation des rouleaux de la calandre est telle que l'on obtient une production de 5 m/min. La température du cylindre en acier de la calandre est de 30°C.

Après calandrage, on obtient un complexe pesant 3100 g/m2 et dont la face supérieure est lisse et brillante.

### Exemple 2

On répète l'exemple précédent si ce n'est que les compositions des constituants sont les suivantes :

La feuille support est constituée par une feuille de polyéthylène fortement chargée comportant :
- 20 % de polyéthylène
- 80 % de charge constituée par des carbonates de calcium.

Cette feuille pèse 4 kg/m2, a une densité de 2, et une épaisseur de 2 mm.

La feuille de surface destinée à être associée à ce support est obtenue comme précédemment, par extrusion et a la composition suivante :
- 12 % charge;
- 58 % polyéthylène basse densité et ;
- 30 % polyéthylène haute densité.

La calandre utilisée pour réaliser l'association des deux constituants comporte un cylindre en acier grainé et les conditions de calandrage sont les mêmes qu'à l'exemple 1.

Le produit obtenu pèse 4500 g/m2 et a un aspect grainé brillant.

### Exemple 3

On répète l'exemple 2, si ce n'est que le cylindre en acier de la calandre est porté à une température de 80°C.

On obtient un article similaire à celui de l'exemple 2 si ce n'est que l'aspect de surface est beaucoup plus mat.

Les complexes obtenus conformément à l'invention peuvent être utilisés pour réaliser des revêtements internes d'habitacles de véhicules et plus particulièrement servir pour la réalisation de tapis de sol remplaçant les tapis en caoutchouc utilisés pour une telle application.

De tels matériaux présentent une très grande résistance à l'abrasion, à la rayure, une bonne isolation phonique et/ou thermique, et peuvent également être conformés.

Enfin, ils sont recyclables très facilement.

## Revendications

1. Matériau pour le revêtement de sol pour automobiles constitué par un complexe multicouches comportant une couche support inférieure destinée à être en contact avec la surface à revêtir et assurant le confort, l'absorption des chocs, l'insonorisation, recouverte d'une couche de surface présentant une grande résistance à l'abrasion, les deux couches étant intimement liées l'une à l'autre, l'association des deux couches entre elles étant réalisée par complexage de la couche support et de la couche de surface lors de l'extrusion du film de surface, le complexage étant réalisé par calandrage immédiatement à la sortie de l'extrudeuse du film de surface alors que ce dernier est encore à température élevée, **caractérisé en ce que** :
- la couche support et la couche de surface sont sélectionnées dans la famille des polymères synthétiques à base de polyoléfine, et plus particulièrement à base de polyéthylène ;
- la couche de surface dudit complexe est constituée par une composition comportant un mélange de polyéthylène basse densité, polyéthylène haute densité, éthylène vinyle acétate et des charges ;
- la couche de surface est grainée lors du complexage de la couche support et de la couche de surface ; et
- la couche support destinée à être en contact avec la surface à revêtir est à base d'une composition de polyéthylène basse densité fortement chargée.

2. Matériau selon la revendication 1, **caractérisé en ce que** la couche de surface est réalisée à partir d'une composition dont la formulation est telle qu'elle comporte environ 10 % à 12 % de charge, telle que du carbonate de calcium, 83 % à 58 % de polyéthylène basse densité et 5 % à 30 % de polyéthylène haute densité.

3. Matériau selon la revendication 2, **caractérisé en ce que** le poids au mètre carré de la feuille de surface est compris entre 100 g/m² et 800 g/m², voire même plus, mais en général, de l'ordre de 400 g/m² à 500 g/m².

4. Matériau selon l'une des revendications 2 et 3, **caractérisé en ce que** le poids de la feuille de surface est adapté en fonction de l'état final que l'on veut donner à ladite feuille et notamment aux grain que l'on veut lui communiquer.

5. Matériau selon la revendication 1, **caractérisé en ce que** pour la couche support est à base de polyéthylène basse densité fortement chargé, la quantité de charge, également constituée de carbonate de calcium, étant de l'ordre de 80 % en poids par rapport au support formé.

6. Matériau selon la revendication 5, **caractérisé en ce que** la couche support a un poids au mètre carré qui varie de 1,5 kg à 8 kg voire même plus, une feuille pesant de l'ordre de 2 kg/m² à 4 kg/m² convenant pour la plupart des applications.

7. Matériau selon l'une des revendications 5 et 6, **caractérisé en ce que** la densité de cette structure chargée est comprise entre 1 et 3 et est avantageusement égale à 2.

8. Matériau selon l'une des revendications 5 à 7, **caractérisé en ce qu'**un support non tissé ou autre structure textile, de préférence également à base de polyéthylène, est incorporé à cette sous-couche permettant ainsi d'améliorer les performances mécaniques du complexe et notamment la résistance au poinçonnement.

9. Procédé permettant la réalisation d'un tel complexe selon les revendications 1 à 8, ledit procédé consistant :
- à disposer, à la sortie d'une extrudeuse, une calandre comportant deux cylindres, de préférence un cylindre en acier et un cylindre revêtu d'une surface à base de caoutchouc ;
- à introduire dans l'espace compris entre les cylindres de la calandre une feuille support préalablement préparée à base de polyéthylène fortement chargé ;
- à extruder le film destiné à constituer la couche de surface, la température de la feuille étant comprise entre 200°C et 250°C et de préférence 230°C ; et
- à associer ladite couche de surface et la feuille préalablement formée par passage de ces deux éléments à travers de la calandre.

## Patentansprüche

1. Material zur Bodenverkleidung für Kraftfahrzeuge, bestehend aus einem Mehrschicht-Verbundmaterial mit einer unteren Trägerschicht, die mit der zu verkleidenden Fläche in Kontakt sein soll und den Komfort, die Stoßdämpfung, die Schalldämpfung gewährleistet und die mit einer Oberflächenschicht überzogen ist, welche eine hohe Abriebfestigkeit aufweist, wobei die beiden Schichten eng miteinander verbunden sind, wobei die Verbindung der beiden Schichten untereinander durch Komplex-Bildung der Trägerschicht und der Oberflächenschicht während des Extrudierens des Oberflächenfilms erfolgt, wobei die Komplex-Bildung durch Kalandern unmittelbar beim Extruder-Austritt des Oberflächenfilms erfolgt, während letzterer noch erhöhte Temperatur aufweist, **dadurch gekennzeichnet, dass**:
- die Trägerschicht und die Oberflächenschicht aus der Familie der synthetischen Polymere auf der Basis von Polyolefin, und insbesondere auf der Basis von Polyethylen ausgewählt sind;
- die Oberflächenschicht des genannten Verbundstoffes von einer Zusammensetzung enthaltend eine Mischung aus Polyethylen niedriger Dichte, Polyethylen hoher Dichte, Ethylenvinylacetat und Füllstoffe gebildet ist;
- die Oberflächenschicht bei der Komplex-Bildung der Trägerschicht und der Oberflächenschicht geprägt wird; und dass
die Trägerschicht, welche mit der zu verkleidenden Fläche in Kontakt sein soll, auf der Basis einer Zusammensetzung aus stark gefülltem Polyethylen niedriger Dichte besteht.

2. Material nach Anspruch 1, **dadurch gekennzeichnet, dass** die Oberflächenschicht aus einer Zusammensetzung hergestellt ist, deren Formulierung derart ist, dass sie etwa 10 % bis 12 % Füllstoff, wie zum Beispiel Kalziumkarbonat, 83 % bis 58 % Polyethylen niedriger Dichte und 5 % bis 30 % Polyethylen hoher Dichte enthält.

3. Material nach Anspruch 2, **dadurch gekennzeichnet, dass** das Quadratmetergewicht der Oberflächenfolie zwischen 100 g/m² und 800 g/m² oder sogar darüber liegt, jedoch im Allgemeinen in der Größenordnung von 400 g/m² bis 500 g/m² liegt.

4. Material nach einem der Ansprüche 2 und 3, **dadurch gekennzeichnet, dass** das Gewicht der Oberflächenfolie in Abhängigkeit von dem Endzustand, welcher der genannten Folie gegeben werden soll, und insbesondere an die Prägung, die ihr verliehen werden soll, angepasst ist.

5. Material nach Anspruch 1, **dadurch gekennzeichnet, dass** die Trägerschicht auf der Basis von stark gefülltem Polyethylen niedriger Dichte besteht, wobei die Menge an Füllstoff, der ebenfalls von Kalziumkarbonat gebildet ist, in der Größenordnung von 80 Gew.% bezogen auf den gebildeten Träger liegt.

6. Material nach Anspruch 5, **dadurch gekennzeichnet, dass** die Trägerschicht ein Quadratmetergewicht hat, das von 1,5 kg bis 8 kg oder gar mehr variiert, wobei eine Folie, die in der Größenordnung von 2 kg/m² bis 4 kg/m² wiegt, für die meisten Anwendungen geeignet ist.

7. Material nach einem der Ansprüche 5 und 6, **dadurch gekennzeichnet, dass** die Dichte dieser gefüllten Struktur zwischen 1 und 3 liegt und vorteilhafterweise gleich 2 beträgt.

8. Material nach einem der Ansprüche 5 bis 7, **dadurch gekennzeichnet, dass** ein Träger aus Faservlies oder einer anderen Textilstruktur, vorzugsweise ebenfalls auf der Basis von Polyethylen, in dieser Unterschicht aufgenommen ist, wodurch es möglich ist, die mechanischen Leistungen des Verbundmaterials und insbesondere die Stanzfestigkeit zu verbessern.

9. Verfahren, das die Herstellung eines solchen Komplexes nach den Ansprüchen 1 bis 8 ermöglicht, wobei das genannte Verfahren darauf beruht:
- am Austritt eines Extruders einen Kalander mit zwei Walzen, vorzugsweise einer Stahlwalze und einer mit einer Oberfläche auf der Basis von Gummi beschichteten Walze anzuordnen;
- in den Raum zwischen den Walzen des Kalanders eine zuvor hergestellte Trägerfolie auf der Basis von stark gefülltem Polyethylen einzuführen;
- den Film, welcher die Oberflächenschicht bilden soll, zu extrudieren, wobei die Temperatur der Folie zwischen 200°C und 250°C und vorzugsweise bei 230°C liegt; und
- die genannte Oberflächenschicht und die zuvor gebildete Folie durch Durchführen dieser beiden Elemente durch den Kalander miteinander zu verbinden.

## Claims

1. Material for floor coverings used in motor vehicles, formed by a multilayer complex comprising a lower, backing layer, that is intended to be in contact with the surface to be covered and provides comfort, shock absorption and soundproofing, covered with a surface layer having a high abrasion resistance, the two layers being intimately bonded to each other, the two layers being joined together by complexing the backing layer with the surface layer during extrusion of the surface film, the complexing being carried out by calendering immediately after the extruder for the surface film, while the latter is still at high temperature, **characterized in that**:
- the backing layer and the surface layer are selected from the family of synthetic polymers based on polyolefins, and more particularly based on polyethylene;
- the surface layer of the said complex is formed by a composition comprising a compound of low-density polyethylene, high-density polyethylene, ethylene-vinyl acetate and fillers;
- the surface layer is embossed during complexing of the backing layer with the surface layer; and
- the backing layer intended to be in contact with the surface to be covered is based on a highly filled low-density polyethylene composition.

2. Material according to Claim 1, **characterized in that** the surface layer is made from a composition whose formulation is such that it contains about 10% to 12% filler, such as calcium carbonate, 83% to 58% low-density polyethylene and 5% to 30% high-density polyethylene.

3. Material according to Claim 2, **characterized in that** the weight per square metre of the surface sheet is between 100 g/m² and 800 g/m², or even more, but in general around 400 g/m² to 500 g/m².

4. Material according to either of Claims 2 and 3, **characterized in that** the weight of the surface sheet is tailored according to the final state that it is desired to give the said sheet and especially to the embossment that it is desired to give it.

5. Material according to Claim 1, **characterized in that** the backing layer is based on highly filled low-density polyethylene, the amount of filler, also consisting of calcium carbonate, being around 80% by weight relative to the backing formed.

6. Material according to Claim 5, **characterized in that** the backing layer has a weight per square metre that varies from 1.5 kg to 8 kg, or higher, a sheet weighing around 2 kg/m² to 4 kg/m² being suitable for most applications.

7. Material according to either of Claims 5 and 6, **characterized in that** the density of this structure is between 1 and 3 and is advantageously equal to 2.

8. Material according to one of Claims 5 to 7, **characterized in that** a non-woven backing or another textile structure, preferably also based on polyethylene, is incorporated into this underlayer, thus making it possible to improve the mechanical performance of the complex and especially the puncture resistance.

9. Process for producing such a complex according to Claims 1 to 8, the said process consisting:
- in placing, at the exit of an extruder, a calender comprising two rolls, preferably a steel roll and a roll clad with a rubber-based surface;
- in introducing, into the space lying between the rolls of the calender, a backing sheet prepared beforehand, based on highly filled polyethylene;
- in extruding the film intended to form the surface layer, the temperature of the sheet being between 200°C and 250°C and preferably 230°C; and
- in joining the said surface layer to the preformed sheet by passing these two elements through the calender.
